# FASCICULE DE BREVET EUROPEEN

(11) **EP 3 503 142 B1**
(45) Date de publication et mention de la délivrance du brevet: **24.08.2022**
(21) Numéro de dépôt: 18213771.1
(22) Date de dépôt: 18.12.2018
(51) Int. Cl.: H01G 11/04, H01G 11/28, H01G 11/68, H01G 11/70, H01G 11/84

(54) **RÉALISATION D'UN COLLECTEUR DE DISPOSITIF MICROÉLECTRONIQUE**
HERSTELLUNG EINES KOLLEKTORS MIT MIKROELEKTRONISCHER VORRICHTUNG
PRODUCTION OF A COLLECTOR FOR MICROELECTRONIC DEVICE

(30) Priorité: 21.12.2017 FR 1762744
(43) Date de publication de la demande: 26.06.2019
(73) Titulaire: Commissariat à l'Energie Atomique et aux Energies Alternatives, 75015 Paris (FR)
(72) Inventeur: DUBARRY, Christophe, 38640 CLAIX (FR); GEFFRAYE, Françoise, 38500 LA BUISSE (FR); OUKASSI, Sami, 38120 SAINT-EGREVE (FR)
(74) Mandataire: Decobert, Jean-Pascal

(56) Documents cités:
- EP-A1- 2 192 638
- WO-A1-2015/036720
- CN-B- 104 465 125
- US-A1- 2007 091 543

## Description

### DOMAINE DE L'INVENTION

La présente invention concerne les dispositifs microélectroniques disposant de parties d'électrode et de collecteur de courant, par exemple dans le domaine du stockage d'énergie par voie électrochimique, mais aussi par exemple dans les empilements à couche active comme des couches piezoélectriques, notamment pour la réalisation de capteurs ou d'actionneurs.

L'invention trouve pour application avantageuse, mais non limitative, la fabrication de dispositifs microélectroniques. Par dispositif microélectronique, on entend tout type de dispositif réalisé avec les moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...).

Un intérêt spécifique non limitatif de l'invention est la réalisation de dispositifs de stockage d'énergie électrochimique. Cela inclut notamment les dispositifs du type batterie, accumulateur ou condensateur utilisant un électrolyte.

### ARRIERE-PLAN TECHNOLOGIQUE

En se référant notamment aux systèmes de stockage d'énergie électrochimique, ceux-ci sont de manière générale réalisés par des dépôts successifs sur un substrat d'un premier collecteur de courant, d'une première électrode, d'un électrolyte ou conducteur ionique, d'une deuxième électrode, et d'un deuxième collecteur de courant. Une encapsulation, par le biais de dépôt de couches supplémentaires, ou par report de capot, est souvent nécessaire pour protéger le système de la réactivité chimique avec l'oxygène et la vapeur d'eau.

La migration d'un ou plusieurs ions entre les deux électrodes à travers l'électrolyte permet soit de stocker de l'énergie ou de la délivrer vers un circuit externe.

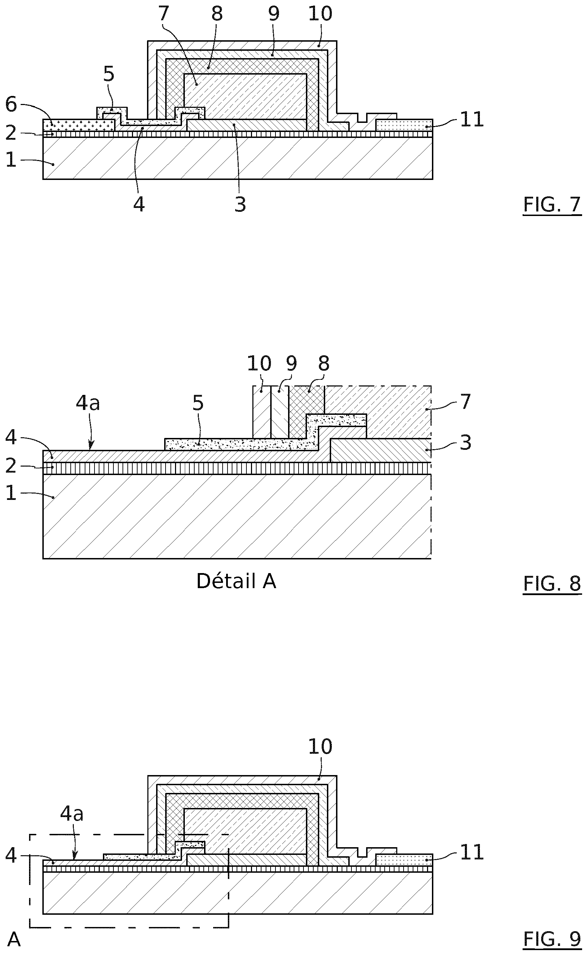

On connait de la publication brevet EP 3012886 A1 un dispositif électrochimique permettant le stockage d'énergie. Il montre par exemple à la figure 9 la formation d'un empilement sur un substrat et comportant traditionnellement un premier collecteur, une première électrode, un électrolyte, une deuxième électrode, et un deuxième collecteur. Dans cette configuration d'empilement, il est nécessaire de disposer un élément diélectrique entre le premier collecteur et la deuxième électrode et le deuxième collecteur pour éviter un court-circuit. La formation de cet isolant électrique est une étape nécessaire et qui doit être menée avec précaution pour la fiabilité de la fabrication du dispositif. De façon commune, il est utilisé un premier collecteur de courant en platine afin de résister au traitement thermique 300-700°C sous atmosphère oxydante employé pour cristalliser la première électrode (notamment LiCoO₂ couramment utilisé). Toutefois l'empilement collecteur, comprenant ainsi du platine recouvert d'un isolant, est sujet à court-circuit avec la seconde électrode. En effet ce dernier engendre des whiskers, c'est-à-dire des formes en aiguille produites par le platine au travers de la couche isolante, lorsque le platine est soumis à des traitements thermiques en présence de métaux de transitions.

On connait de la publication brevet EP2192638 A1 une microbatterie présentant un empilement sur un substrat ; cet empilement comprend un premier collecteur de courant, une première électrode, une couche d'électrolyte, une deuxième électrode, un deuxième collecteur et une encapsulation. Le premier collecteur s'étend latéralement au-delà de la première électrode et un bouchon d'alumine assure l'isolation entre le premier collecteur et l'ensemble formé par la deuxième électrode et le deuxième collecteur.

Il existe donc actuellement un besoin pour une fabrication améliorée de dispositifs comprenant une partie de collecteur et une partie d'électrode, portées par un substrat. C'est un objet de l'invention que de pallier au moins en partie les inconvénients des techniques actuelles pour y parvenir.

### RESUME DE L'INVENTION

Un aspect non limitatif de l'invention est relatif à un procédé de réalisation d'un dispositif microélectronique comprenant en empilement sur une face d'un substrat :
- un premier collecteur de courant,
- une première électrode,
- une couche active,
- une deuxième électrode,
- un deuxième collecteur de courant,
dispositif dans lequel le premier collecteur de courant comprend un premier élément collecteur comprenant une portion supérieure en contact avec la première électrode et un deuxième élément collecteur en continuité électrique avec, et s'étendant latéralement depuis, le premier élément collecteur au-delà

de la première électrode, le dispositif comprenant en outre un élément diélectrique configuré pour isoler électriquement le deuxième élément collecteur et au moins l'un parmi la deuxième électrode et le deuxième collecteur de courant.

Avantageusement le procédé comprend la formation d'une portion supérieure du deuxième élément collecteur en un matériau différent du matériau de la portion supérieure du premier élément collecteur et une transformation, en un matériau modifié, du matériau d'une partie seulement de l'épaisseur de la portion supérieure du deuxième élément collecteur de sorte à former une couche superficielle en matériau modifié plus résistif électriquement que le matériau de la portion supérieure du deuxième élément collecteur de sorte à former au moins en partie l'élément diélectrique.

Un autre aspect séparable de la présente invention concerne un dispositif microélectronique comprenant en empilement sur une face d'un substrat :
- un premier collecteur de courant,
- une première électrode,
- une couche active,
- une deuxième électrode,
- un deuxième collecteur de courant,
dans lequel le premier collecteur de courant comprend un premier élément collecteur comprenant une portion supérieure en contact avec la première électrode et un deuxième élément collecteur en continuité électrique avec, et s'étendant latéralement depuis, le premier élément collecteur au-delà de la première électrode, le dispositif comprenant en outre un élément diélectrique configuré pour isoler électriquement le deuxième élément collecteur et au moins l'un parmi la deuxième électrode et le deuxième collecteur de courant.

Avantageusement ce dispositif est tel que le deuxième élément collecteur comprend une portion supérieure en un matériau différent du matériau de la portion supérieure du premier élément collecteur et l'élément diélectrique comprend une couche superficielle en un matériau modifié issu du matériau d'une partie seulement de la portion supérieure du deuxième élément collecteur, le matériau modifié étant plus résistif électriquement que le matériau de la portion supérieure du deuxième élément collecteur. La couche superficielle en un matériau modifié forme ainsi au moins en partie l'élément diélectrique.

Ainsi, au moins une partie de l'élément diélectrique est issue d'une transformation de la matière du deuxième élément collecteur. Il ne s'agit pas d'un dépôt additionnel ce qui permet l'économie d'un tel dépôt. En outre, la localisation de la formation de l'isolant électrique est précise et systématiquement fiable, puisque forcément faite au-dessus du deuxième élément collecteur. Dans un mode de réalisation non limitatif, on peut profiter d'un traitement appliqué à une autre partie du dispositif, par exemple à la première électrode, pour réaliser la transformation ; par exemple, un traitement thermique de cristallisation du matériau de la première électrode peut servir à générer la couche superficielle de matériau modifié du deuxième élément collecteur. Dans ce dernier cas, la fabrication de l'élément diélectrique n'implique pas d'étape supplémentaire. Suivant d'autres aspect de modes de réalisation de l'invention, la réalisation du premier collecteur de courant en plusieurs parties (pour le moins un premier élément collecteur et un deuxième élément collecteur) permet de sélectionner les matériaux les plus appropriés pour chacune de ces parties. Notamment, le platine peut être retenu pour le premier élément (pour le moins dans sa portion supérieure) alors qu'un matériau plus oxydable tel que le titane peut être retenu pour le deuxième élément.

### BREVE INTRODUCTION DES FIGURES

D'autres caractéristiques, buts et avantages de la présente invention apparaitront à la lecture de la description détaillée qui suit, en regard des dessins annexés, donnés à titre d'exemples, non limitatifs, et sur lesquels :
- Les FIGURES 1 à 7 présentent des étapes successives potentielles du procédé l'invention ;
- les FIGURES 8 et 9 présentent respectivement une vue de détail et une vue plus générale d'une variante de dispositif de l'invention.

Les dessins sont donnés à titre d'exemples et ne sont pas limitatifs de l'invention.

Ils constituent des représentations schématiques de principe destinées à faciliter la compréhension de l'invention et ne sont pas nécessairement à l'échelle des applications pratiques. En particulier, les épaisseurs relatives des couches ne sont pas représentatives de la réalité.

### DESCRIPTION DETAILLEE

Il est précisé que, dans le cadre de la présente invention, le terme « sur » ou « au-dessus » ne signifie pas obligatoirement « au contact de ». Ainsi, par exemple, le dépôt d'une couche sur une autre couche, ne signifie pas obligatoirement que les deux couches sont directement au contact l'une de l'autre mais cela signifie que l'une des couches recouvre au moins partiellement l'autre en étant, soit directement à son contact, soit en étant séparée d'elle par un film, ou encore une autre couche ou un autre élément. Une couche peut par ailleurs être composée de plusieurs sous-couches d'un même matériau ou de matériaux différents.

Il est précisé que dans le cadre de la présente invention, l'épaisseur d'une couche ou du substrat se mesure selon une direction perpendiculaire à la surface selon laquelle cette couche ou ce substrat présente son extension maximale. Une direction latérale s'entend comme dirigée perpendiculairement à l'épaisseur du substrat.

Certaines parties du dispositif de l'invention peuvent avoir une fonction électrique. Certaines sont employées pour des propriétés de conduction électrique et on entend par électrode, collecteur ou équivalent, des éléments formés d'au moins un matériau ayant une conductivité électrique suffisante, dans l'application, pour réaliser la fonction souhaitée. À l'inverse, on entend par isolant électrique ou diélectrique un matériau qui, dans l'application, assure une fonction d'isolation électrique.

Selon l'invention, on réalise un dispositif microélectronique comprenant pour le moins, sur un substrat, un premier collecteur de courant et une première électrode. Au sens de la présente demande, le terme collecteur s'entend d'une partie du dispositif ayant pour fonction de raccorder une électrode à un élément extérieur au dispositif, c'est-à-dire situé à l'extérieur de l'empilement de couches du dispositif, généralement encapsulées. Le terme électrode s'entend quant à lui d'une partie du dispositif en continuité électrique avec une couche active (en particulier un électrolyte, de préférence solide, pour le cas du stockage électrochimique ou encore une couche piézoélectrique par exemple). Le collecteur de courant est raccordé à son électrode de sorte à établir une continuité électrique entre ces deux parties ; ces dernières peuvent en outre être issues d'une ou plusieurs couches communes de matériaux ; dans ce cas, le collecteur formera généralement une excroissance de l'électrode, vers l'extérieur du dispositif encapsulé. Cette excroissance peut être moins large que l'électrode elle-même, il peut s'agir d'une bande conductrice étroite dirigée latéralement relativement à l'empilement.

D'une manière générale, le système de l'invention comprend un empilement de couches permettant de réaliser les différents composants d'un organe, par exemple de stockage électrochimique. Dans ce cas, l'empilement comprend lui-même un premier collecteur, une première électrode, un électrolyte (réalisé de manière avantageuse par un conducteur ionique solide), une deuxième électrode et un deuxième collecteur. L'électrolyte est une portion intercalée entre les deux portions conductrices séparées constituées respectivement du premier collecteur et de la première électrode, et de la deuxième électrode et du deuxième collecteur. Des échanges ioniques entre ces deux portions conductrices s'opèrent au travers de l'électrolyte, avantageusement solide, suivant le principe de stockage d'énergie électrochimique.

Plus précisément, ce type de système est réalisé comment en figure 7 sur une partie de base 1 d'un substrat (par exemple en verre ou en silicium) et comprend en empilement : une couche 2 isolante si la partie de base 1 du substrat est électriquement conductrice, un premier collecteur de courant 3, 4, une première électrode 7, un électrolyte ou conducteur ionique 8, une deuxième électrode 9, et un deuxième collecteur de courant 10. Une encapsulation peut être réalisée par une couche isolante électronique et, éventuellement, une encapsulation par une couche métallique finale. En figure 7, les collecteurs de courant 3, 4 ; 10, raccordés chacun à l'une des électrodes, sont accessibles par l'extérieur de l'empilement du dispositif de stockage électrochimique, pour une reprise de contact par les plots 6, 11. Néanmoins, le recours à des plots 6, 11 ou à toute autre forme de reprise de contact séparée des collecteurs n'est pas absolument nécessaire ; par exemple, une partie d'un collecteur lui-même peut servir à la reprise de contact ; c'est tout particulièrement le cas d'une portion du deuxième élément collecteur du premier collecteur de courant comme illustré à la figure 9 et expliqué plus en détail ultérieurement.

La première électrode 7 (ou électrode positive utilisée dans un accumulateur au lithium ou sodium conventionnel) est potentiellement utilisable dans une microbatterie et les exemples de matériaux sont d'ailleurs nombreux, comme : LiCoO₂, V₂O₅, TiS₂, LiMn₂O₄, NaMnO₂, NaCoO₂...

L'électrolyte solide ou matériau super-ionique à base de verre sont parmi les meilleurs candidats pour les électrolytes solides inorganiques applicables à toute batterie tout-solide. Il a été développé un grand choix de sulfures et systèmes vitreux d'électrolyte d'oxysulfure, ainsi qu'une série de verre-céramique super-ionique de sulfure Li₂S-P₂S₅, dont la conductivité d'ion de Li⁺ est comparable à celle des électrolytes liquides. En ce qui concerne l'électrolyte pour les batteries au sodium, il existe la même famille de verre, par exemple Na₃PS₄.

On notera que dans la configuration de la figure 7, comme dans celle de la variante présentée à la figure 9, la première électrode 7 est assez largement recouverte par la couche active d'électrolyte 8, notamment sur la face supérieure de la première électrode 7 mais aussi sur ses flancs. De même, la deuxième électrode 9 recouvre largement l'électrolyte 8, sur sa face supérieure mais aussi sur ses flancs. La situation est similaire pour le recouvrement du deuxième collecteur 10. De par cette configuration, une partie de pied de la deuxième électrode 9 et/ou une partie de pied du deuxième collecteur 10 se prolonge en direction de la face supérieure du substrat si bien qu'il pourrait y avoir contact entre l'une ou l'autre de ces parties et le premier collecteur de courant. Pour éviter une telle situation, on a recours à un élément diélectrique interposé entre les éléments conducteurs destinés à rester séparés électriquement autour de l'électrolyte 8.

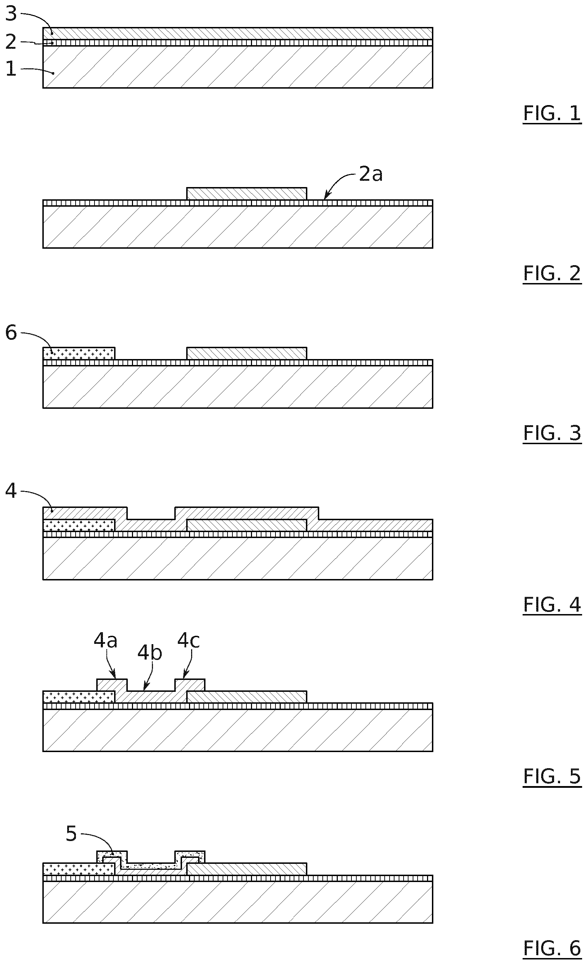

Pour parvenir au résultat de la figure 7, on décrit ci-après un procédé en suivant la chronologie des figures 1 à 6.

L'invention peut être mise en œuvre sur la base d'un substrat 1 en tout matériau, et notamment ceux utilisés dans le domaine de la micro-électronique, par exemple des semi-conducteurs tels du silicium. Si la base 1 du substrat est de nature électriquement conductrice, on y adjoint de préférence une couche électriquement isolante 2 dont la face exposée 2a va recevoir l'empilement constitutif du dispositif électrochimique. Ainsi, on a représenté en figure 1 une coupe transversale illustrant un tel substrat avec une couche diélectrique au-dessus de laquelle une première couche 3 de premier collecteur est formée. Son épaisseur peut être comprise entre 50 et 200 nm par exemple.

Typiquement, pour le dépôt de cette couche et, avantageusement pour le dépôt des autres couches de l'empilement, on peut utiliser une technique de dépôt physique en phase vapeur connue sous le vocable anglais PVD pour Physical Vapor Déposition.

La couche correspondant à la référence 3 est destinée à former une première partie du premier collecteur de courant. Dans le cas des illustrations, il s'agit d'un premier élément collecteur 3 destiné à former la continuité électrique avec la face inférieure de la première électrode 7. Par exemple, la face supérieure du premier élément collecteur 3 peut présenter des formes et dimensions équivalentes à celles de la face inférieure de la première électrode 7. Pour conformer cette partie du collecteur, on a illustré en figure 2 la définition d'un motif correspondant, à partir de la couche précédemment déposée à la figure 1. Une étape de photolithographie ainsi qu'une étape de gravure humide, permettent la réalisation d'un motif pour le premier élément collecteur 3. Selon l'invention, le premier élément collecteur est de manière préférentielle en platine. Ce matériau est effectivement pratiquement inoxydable si bien qu'il n'est pas sensible à d'éventuelles étapes de traitement ultérieures telles que des traitements thermiques susceptibles d'affecter, notamment par oxydation, d'autres matériaux. On peut aussi recourir à du FeGAl ou du MoSiₓ.

À la figure 3, un plot 6 de reprise de contact pour le premier collecteur de courant est réalisé. À titre purement indicatif, ce plot peut-être en aluminium. Il peut aussi être en un matériau très peu oxydant comme ceux indiqués pour le premier élément 3. Il peut faire entre 50 et 500 nm d'épaisseur. Il peut être issu de phases de dépôt puis de photolithographie et de gravure. Le plot 6 est décalé latéralement relativement au motif du premier élément collecteur 3.

Ensuite, une couche de formation d'un deuxième élément collecteur 4 est produite. En effet, dans un mode préféré de réalisation de l'invention, le premier collecteur est en au moins deux parties juxtaposées, ce qui permet de différencier les matériaux du collecteur exposés lors d'un traitement ; ce traitement assure une transformation de l'un des matériaux, pour produire un isolant électrique.

Dans le cas de la figure 4, il s'agit d'un dépôt pleine plaque recouvrant les parties précédemment formées. Il s'agit alors de mettre en forme le deuxième élément collecteur 4 comme dans le cas de la figure 5. On peut employer du titane pour cette partie. Tous les matériaux électriquement conducteurs peuvent convenir, comme Ti, Al, Ni, Ta, Hf, en étant avantageusement peu onéreux, notamment en évitant le platine. Comme indiqué précédemment, selon l'invention, les matériaux utilisés pour le premier élément collecteur 3 et pour le deuxième élément collecteur 4 sont avantageusement différents. On emploiera pour le deuxième élément collecteur 4, un matériau plus sensible à une transformation configurée pour modifier un matériau de sorte à le rendre plus diélectrique, c'est-à-dire accroître sa résistivité électrique. En particulier, le matériau utilisé pour le deuxième élément collecteur 4 peut être plus sensible à une oxydation ou à une nitruration.

Dans ce cas d'espèce, on définit, par exemple par photolithographie puis gravure, un motif de deuxième collecteur 4 raccordant le plot 6 et le premier élément collecteur 3. Pour le moins, le deuxième élément collecteur comprend une portion 4b disposée au-dessus de la face supérieure 2a du substrat raccordant latéralement les deux éléments collecteurs. En outre, le cas représenté montre des parties 4a et 4c formant un rebord respectivement au-dessus du plot 6 et du premier élément collecteur 3.

On notera que les exemples correspondant aux figures des figures 1 à 9, les éléments de collecteurs sont chacun en une seule couche.

Il est cependant possible de disposer plusieurs couches en empilement pour l'un et pour l'autre des éléments collecteurs 3, 4. Par exemple, une couche de titane peut servir de couche sous-jacente pour une couche de platine (par exemple) de sorte à construire le premier élément collecteur 3.

Eventuellement, cette couche de titane peut aussi servir pour constituer tout ou partie du deuxième collecteur, le motif issu de la couche de titane s'étendant alors latéralement au-delà du motif de platine. Les exemples du titane et du platine sont indicatifs.

L'expression « portion supérieure » s'entend dans la présente invention comme de la couche d'un des premier et deuxième éléments collecteurs, faite d'un matériau donné, et située dans ledit élément collecteur de sorte à former la partie la plus en élévation par rapport au substrat. Si un élément collecteur ne comprend qu'une couche d'un matériau, la portion supérieure s'étend depuis le substrat jusqu'à la face supérieure dudit élément collecteur. Si l'élément collecteur considéré a plusieurs couches de matériaux différents, la portion supérieure est celle la plus éloignée du substrat. C'est cette portion qui contacte la première électrode, dans le cas du premier élément conducteur. On verra que c'est à cette portion du deuxième élément conducteur qu'on applique une transformation d'une partie de l'épaisseur, depuis la face supérieure de ladite portion.

On peut former un deuxième élément collecteur 4 de même épaisseur que le premier.

La figure 6 illustre une étape de transformation appliquée à ce deuxième élément de sorte à produire une couche superficielle 5 d'un matériau modifié à partir du matériau du deuxième élément collecteur 4. Le matériau modifié est suffisamment isolant pour former un élément diélectrique qui va servir à isoler le premier collecteur de courant des autres couches, telles que la deuxième électrode et le deuxième collecteur.

Avantageusement, c'est un oxyde (issu d'une oxydation) ou un nitrure (issu d'une nitruration) du matériau de la couche 4 qui était exposé lors de la transformation. Cette transformation n'est que partielle de sorte à ce que le deuxième élément collecteur 4 soit finalement divisé en :
- une partie superficielle d'isolation électrique ;
- une partie sous-jacente de conduction électrique depuis la première électrode vers l'extérieur du dispositif.

Suivant l'exemple dans lequel le matériau à transformer est du titane et lorsque la transformation est une oxydation, on peut par exemple relever des cinétiques de transformation selon le tableau suivant :

| **Epaisseur de couche de titane (µm)** | **Conditions d'oxydation** | | **Epaisseur de couche de TiO₂ obtenue (µm)** |
|---|---|---|---|
| | **Temp. (°C)** | **Durée (h)** | |
| 0,06 | 550 | 10 | 0,10 |
| 0,12 | 550 | 10 | 0,20 |
| 0,18 | 550 | 10 | 0,31 |
| 0,24 | 650 | 10 | 0,41 |
| 0,3 | 650 | 10 | 0,51 |

On note que l'oxydation produit une croissance d'oxyde dont l'épaisseur devient rapidement notable et assure sa fonction diélectrique. Il reste néanmoins en dessous de cet oxyde une épaisseur non nulle de titane originel.

La couche superficielle 5 peut par exemple présenter une résistivité électrique supérieure ou égale à 10⁶ Ω.cm. Celle de la partie sous-jacente est par exemple inférieure ou égale à 10⁻⁶ Ω.cm. La couche 5 a préférentiellement une épaisseur supérieure à 50 nm ; la couche sous-jacente conductrice a préférentiellement une épaisseur supérieure à 30 nm.

Par simplification, correspondant à un premier mode de réalisation de l'invention, la figure 6 illustre l'étape de transformation avant la réalisation d'autres parties du dispositif, et notamment avant la fabrication de la première électrode 7. Pour autant, il est possible, voire avantageux, de tirer profit du traitement thermique qui peut être nécessaire pour d'autres parties du dispositif, de sorte à transformer le matériau du deuxième élément collecteur 4.

En particulier, dans le cas d'un dispositif électrochimique, il est recouru à un traitement thermique de cristallisation de la première électrode. La transformation du deuxième élément collecteur 4 peut être produite par ce traitement. On donne ci-après un exemple de traitement dans ce contexte. On économise ainsi une étape dédiée pour la transformation. Cependant, un tel traitement, par exemple par un recuit d'oxydation thermique, pourrait être produit avant la fabrication d'autres parties du dispositif.

La phase de formation de la première électrode est produite grâce au dépôt d'une couche de première électrode 7. D'une manière générale, l'électrode positive peut-être du LICO (contraction du terme Lithium-Cobalt) ; elle peut être déposée par PVD, afin d'obtenir une épaisseur de couche notamment comprise entre 3 µm et 20 µm.

Une étape de photolithographie ainsi qu'une étape de gravure humide, permettent la réalisation d'un motif de première électrode 7, tel que représenté à la figure 7. Dans cette configuration, la face inférieure de la première électrode 7 est au contact de la face supérieure du premier élément collecteur. La gravure s'effectue par exemple dans un bain de H₂SO₄/H₂O₂/H₂O (1/5/32), la vitesse de gravure étant de l'ordre de 6 µm/min.

Comme indiqué précédemment, la réalisation de la première électrode 7 impose, généralement, un traitement thermique. À noter que ce dernier peut éventuellement être réalisé avant la mise en forme du motif de première électrode. Le traitement thermique peut être un recuit sous atmosphère oxydante à une température supérieure ou égale à 300°C, possiblement supérieure ou égale à 500°C, voire supérieure ou égal à 700°C. À l'issue de ce traitement, la structure cristalline de la première électrode est fixée.

Par dépôt PVD notamment, l'électrolyte 8, de préférence du LiPON, notamment de 1,5 µm d'épaisseur, ainsi que l'électrode négative 9, notamment de 100 nm d'épaisseur, par exemple en silicium, et le deuxième collecteur 10, notamment de 1 mm d'épaisseur, par exemple en Cu ou Ti, vont être déposés successivement. Ces portions peuvent, à ce stade, être mises en forme. Par exemple, une photolithographie va permettre de localiser les futurs motifs de ces parties, qui vont être créés ensuite par un plasma ou des gravures humides avec des solutions adéquates. La figure 7 en donne un résultat.

Le cas de la figure 9 est proche du précédent en ce que le dispositif y comporte un isolant issu d'une transformation du premier collecteur.

On a néanmoins, dans ce cas, enlevé une partie, ici distale, de la couche superficielle 5 pour exposer la surface 4a du deuxième élément collecteur 4, pour une reprise de contact à cet endroit. Cet enlèvement peut être localisé à tout endroit adapté à la reprise de contact électrique, endroit distinct de la zone d'isolation électrique du premier collecteur. Comme le montre plus en détail la figure 8, il n'est alors plus indispensable de prévoir un plot de reprise de contact à cet endroit.

Sauf indication spécifique du contraire, des caractéristiques techniques décrites en détail pour un mode de réalisation donné peuvent être combinées à des caractéristiques techniques décrites dans le contexte d'autres modes de réalisation décrits à titre exemplaire et non limitatif, dont ceux expliqués en détail ci-dessus.

L'exemple donné en référence aux dessins s'inscrit dans le domaine du stockage d'énergie par voie électrochimique, en utilisant un électrolyte avantageusement sous forme de conducteur ionique solide. Néanmoins, d'autres dispositifs microélectroniques sont concernés par la présente invention, en mettant en œuvre des étapes équivalentes pour la fabrication du premier collecteur et de la première électrode, les étapes suivantes pouvant varier suivant l'application. Par exemple, l'invention peut être appliquée à des couches actives de nature électroactive, en particulier piézo-électriques dans des capteurs ou dans des actionneurs notamment. L'électrolyte est donc alors remplacé par une couche piézo-électrique ensuite recouverte de la deuxième électrode et du deuxième collecteur.

Outre la revue détaillée qui précède de modes de réalisation de l'invention, sont énoncées ci-après des caractéristiques optionnelles qui peuvent éventuellement être utilisées suivant toute association ou alternativement :
- La transformation comprend une oxydation ou une nitruration.
- Avantageusement, le matériau de la portion supérieure du deuxième élément collecteur 4 est choisi plus oxydable que le matériau de la portion supérieure du premier élément collecteur 3.
- Préférentiellement on réalise une étape de traitement thermique de la première électrode 7, ladite étape étant configurée pour produire la transformation.
- Le premier élément collecteur 3 est formé avec une couche sous-jacente à la couche supérieure du premier collecteur.
- La couche sous-jacente forme aussi la couche supérieure du deuxième élément collecteur 4 .
- Selon un mode de réalisation préféré, le procédé comprend la formation de la couche active au contact d'une face supérieure de la première électrode 7, une formation de la deuxième électrode 9 au contact d'une face supérieure de la couche active et une formation du deuxième collecteur 10 en continuité électrique avec la deuxième électrode 9.
- la formation de la deuxième électrode 9 et la formation du deuxième collecteur 10 sont configurées pour qu'au moins l'un parmi la deuxième électrode 9 et le deuxième collecteur 10 soit isolé électriquement du premier collecteur par contact sur la couche superficielle.
- le procédé comprend éventuellement un enlèvement partiel de la couche superficielle de sorte à exposer le matériau de la portion supérieure du deuxième élément collecteur dans une zone de reprise de contact électrique.
- De préférence, le matériau modifié est un oxyde ou un nitrure du matériau de la portion supérieure du deuxième élément collecteur 4.
- Le matériau de la portion supérieure du deuxième élément collecteur 4 est plus oxydable que le matériau de la portion supérieure du premier élément collecteur 3.
- le matériau de la portion supérieure du premier élément collecteur 3 est le platine.
- Préférentiellement, le premier collecteur comprend une couche sous-jacente dont une partie est située en dessous de la portion supérieure du premier élément collecteur 3 et dont une autre partie forme la portion supérieure du deuxième élément collecteur 4.

## Revendications

1. Procédé de réalisation d'un dispositif microélectronique comprenant en empilement sur une face d'un substrat (1):
- un premier collecteur de courant,
- une première électrode (7),
- une couche active (8),
- une deuxième électrode (9),
- un deuxième collecteur de courant (10),
dans lequel le premier collecteur de courant comprend un premier élément collecteur (3) comprenant une portion supérieure en contact avec la première électrode (7) et un deuxième élément collecteur (4) en continuité électrique avec, et s'étendant latéralement depuis, le premier élément collecteur (3) au-delà de la première électrode (7), le dispositif comprenant en outre un élément diélectrique configuré pour isoler électriquement le deuxième élément collecteur (4) et au moins l'un parmi la deuxième électrode (9) et le deuxième collecteur de courant (10),
**caractérisé par le fait que** le deuxième élément collecteur (4) est formé au moins d'une couche de matériau et en ce qu'il comprend la formation d'une portion supérieure du deuxième élément collecteur (4) en un matériau différent du matériau de la portion supérieure du premier élément collecteur (3) et une transformation, en un matériau modifié, du matériau d'une partie seulement de l'épaisseur de la portion supérieure du deuxième élément collecteur (4) de sorte à former une couche superficielle (5), en matériau modifié diélectrique, formant au moins en partie l'élément diélectrique.

2. Procédé selon la revendication 1, dans lequel la transformation comprend une oxydation ou une nitruration.

3. Procédé selon l'une des revendications précédentes, dans lequel le matériau de la portion supérieure du deuxième élément collecteur (4) est choisi plus oxydable que le matériau de la portion supérieure du premier élément collecteur (3).

4. Procédé selon l'une des revendications précédentes comprenant une étape de traitement thermique de la première électrode (7), ladite étape étant configurée pour produire la transformation.

5. Procédé selon l'une des revendications précédentes, dans lequel on forme le premier élément collecteur (3) avec une couche sous-jacente à la couche supérieure du premier collecteur.

6. Procédé selon la revendication précédente, dans lequel la couche sous-jacente forme aussi la couche supérieure du deuxième élément collecteur (4).

7. Procédé selon l'une des revendications précédentes, comprenant, la formation de la couche active au contact d'une face supérieure de la première électrode (7), une formation de la deuxième électrode (9) au contact d'une face supérieure de la couche active et une formation du deuxième collecteur (10) en continuité électrique avec la deuxième électrode (9).

8. Procédé selon la revendication précédente, dans lequel la formation de la deuxième électrode (9) et la formation du deuxième collecteur (10) sont configurées pour qu'au moins l'un parmi la deuxième électrode (9) et le deuxième collecteur(10) soit isolé électriquement du premier collecteur par contact sur la couche superficielle.

9. Procédé selon l'une des revendications précédentes, comprenant un enlèvement partiel de la couche superficielle de sorte à exposer le matériau de la portion supérieure du deuxième élément collecteur (4) dans une zone de reprise de contact électrique.

10. Dispositif microélectronique comprenant en empilement sur une face d'un substrat (1) :
- un premier collecteur de courant,
- une première électrode (7),
- une couche active (8),
- une deuxième électrode (9),
- un deuxième collecteur de courant (10),
dans lequel le premier collecteur de courant comprend un premier élément collecteur (3) comprenant une portion supérieure en contact avec la première électrode (7) et un deuxième élément collecteur (4) en continuité électrique avec, et s'étendant latéralement depuis, le premier élément collecteur (3) au-delà de la première électrode (7),
le dispositif comprenant en outre un élément diélectrique configuré pour isoler électriquement le deuxième élément collecteur (4) et au moins l'un parmi la deuxième électrode (9) et le deuxième collecteur de courant (10),
**caractérisé par le fait que** le deuxième élément collecteur (4) est formé d'au moins une couche de matériau et qu'il comprend une portion supérieure en un matériau différent du matériau de la portion supérieure du premier élément collecteur (3) et en ce que l'élément diélectrique comprend une couche superficielle (5) en un matériau modifié issu du matériau d'une partie seulement de la portion supérieure du deuxième élément collecteur (4), le matériau modifié étant diélectrique.

11. Dispositif selon la revendication précédente, dans lequel le matériau modifié est un oxyde ou un nitrure du matériau de la portion supérieure du deuxième élément collecteur (4).

12. Dispositif selon l'une des deux revendications précédentes, dans lequel le matériau de la portion supérieure du deuxième élément collecteur (4) est plus oxydable que le matériau de la portion supérieure du premier élément collecteur (3).

13. Dispositif selon l'une des trois revendications précédentes, dans lequel le matériau de la portion supérieure du premier élément collecteur (3) est le platine.

14. Dispositif selon l'une des quatre revendications précédentes, dans lequel le premier collecteur comprend une couche sous-jacente dont une partie est située en dessous de la portion supérieure du premier élément collecteur (3) et dont une autre partie forme la portion supérieure du deuxième élément collecteur (4).

## Patentansprüche

1. Verfahren zur Herstellung einer mikroelektronischen Vorrichtung, umfassend stapelförmig auf einer Seite eines Substrats (1):
- einen ersten Stromkollektor,
- eine erste Elektrode (7),
- eine aktive Schicht (8),
- eine zweite Elektrode (9),
- einen zweiten Stromkollektor (10),
wobei der erste Stromkollektor ein erstes Kollektorelement (3) umfasst, umfassend einen oberen Abschnitt in Kontakt mit der ersten Elektrode (7), und ein zweites Kollektorelement (4) in elektrischer Kontinuität mit und sich seitlich von dem ersten Kollektorelement (3) über die erste Elektrode (7) hinaus erstreckend, wobei die Vorrichtung weiter ein dielektrisches Element umfasst, das ausgestaltet ist, das zweite Kollektorelement (4) und wenigstens eines von der zweiten Elektrode (9) und dem zweiten Stromkollektor (10) elektrisch zu isolieren,
**dadurch gekennzeichnet, dass** das zweite Kollektorelement (4) wenigstens von einer Materialschicht gebildet wird und dadurch, dass es die Bildung eines oberen Abschnitts des zweiten Kollektorelements (4) aus einem Material, das von dem Material des oberen Abschnitts des ersten Kollektorelements (3) verschieden ist, und eine Umwandlung des Materials von nur einem Teil der Dicke des oberen Abschnitts des zweiten Kollektorelements (4) in ein modifiziertes Material umfasst, um eine Oberflächenschicht (5) aus dielektrischem, modifiziertem Material zu bilden, die wenigstens teilweise das dielektrische Element bildet.

2. Verfahren nach Anspruch 1, wobei die Umwandlung eine Oxidation oder eine Nitrierung umfasst.

3. Verfahren nach einem der vorstehenden Ansprüche, wobei das Material des oberen Abschnitts des zweiten Kollektorelements (4) oxidierbarer gewählt wird als das Material des oberen Abschnitts des ersten Kollektorelements (3).

4. Verfahren nach einem der vorstehenden Ansprüche, umfassend einen Schritt zur Wärmebehandlung der ersten Elektrode (7), wobei der Schritt ausgestaltet ist, die Umwandlung zu erzeugen.

5. Verfahren nach einem der vorstehenden Ansprüche, wobei das erste Kollektorelement (3) mit einer in Bezug auf die obere Schicht des ersten Kollektors darunterliegenden Schicht gebildet wird.

6. Verfahren nach dem vorstehenden Anspruch, wobei die darunterliegende Schicht auch die obere Schicht des zweiten Kollektorelements (4) bildet.

7. Verfahren nach einem der vorstehenden Ansprüche, umfassend die Bildung der aktiven Schicht in Kontakt mit einer oberen Seite der ersten Elektrode (7), eine Bildung der zweiten Elektrode (9) in Kontakt mit einer oberen Seite der aktiven Schicht und eine Bildung des zweiten Kollektors (10) in elektrischer Kontinuität mit der zweiten Elektrode (9).

8. Verfahren nach dem vorstehenden Anspruch, wobei die Bildung der zweiten Elektrode (9) und die Bildung des zweiten Kollektors (10) so ausgestaltet sind, dass wenigstens eines von der zweiten Elektrode (9) und dem zweiten Kollektor (10) von dem ersten Kollektor durch Kontakt auf der Oberflächenschicht elektrisch isoliert wird.

9. Verfahren nach einem der vorstehenden Ansprüche, umfassend eine teilweise Entfernung der Oberflächenschicht, um das Material des oberen Abschnitts des zweiten Kollektorelements (4) in einer Zone der Wiederherstellung elektrischen Kontakts freizulegen.

10. Mikroelektronische Vorrichtung, umfassend stapelförmig auf einer Seite eines Substrats (1):
- einen ersten Stromkollektor,
- eine erste Elektrode (7),
- eine aktive Schicht (8),
- eine zweite Elektrode (9),
- einen zweiten Stromkollektor (10),
wobei der erste Stromkollektor ein erstes Kollektorelement (3) umfasst, umfassend einen oberen Abschnitt in Kontakt mit der ersten Elektrode (7), und ein zweites Kollektorelement (4) in elektrischer Kontinuität mit und sich seitlich von dem ersten Kollektorelement (3) über die erste Elektrode (7) hinaus erstreckend,
wobei die Vorrichtung weiter ein dielektrisches Element umfasst, das ausgestaltet ist, das zweite Kollektorelement (4) und wenigstens eines von der zweiten Elektrode (9) und dem zweiten Stromkollektor (10) elektrisch zu isolieren,
**dadurch gekennzeichnet, dass** das zweite Kollektorelement (4) wenigstens von einer Materialschicht gebildet wird und dadurch, dass es einen oberen Abschnitt aus einem Material, das von dem Material des oberen Abschnitts des ersten Kollektorelements (3) verschieden ist, umfasst, und dadurch, dass das dielektrische Element eine Oberflächenschicht (5) aus einem modifizierten Material umfasst, das aus dem Material von nur einem Teil des oberen Abschnitts des zweiten Kollektorelements (4) stammt, wobei das modifizierte Material dielektrisch ist.

11. Vorrichtung nach dem vorstehenden Anspruch, wobei das modifizierte Material ein Oxid oder ein Nitrid des Materials des oberen Abschnitts des zweiten Kollektorelements (4) ist.

12. Vorrichtung nach einem der zwei vorstehenden Ansprüche, wobei das Material des oberen Abschnitts des zweiten Kollektorelements (4) oxidierbarer ist als das Material des oberen Abschnitts des ersten Kollektorelements (3).

13. Vorrichtung nach einem der drei vorstehenden Ansprüche, wobei das Material des oberen Abschnitts des ersten Kollektorelements (3) Platin ist.

14. Vorrichtung nach einem der vier vorstehenden Ansprüche, wobei der erste Kollektor eine darunterliegende Schicht umfasst, von der sich ein Teil unterhalb des oberen Abschnitts des ersten Kollektorelements (3) befindet und von der ein anderer Teil den oberen Abschnitt des zweiten Kollektorelements (4) bildet.

## Claims

1. Method for producing a microelectronic device with the following stacked on one side of a substrate (1):
- a first current collector,
- a first electrode (7),
- an active layer (8),
- a second electrode (9),
- a second current collector (10),
wherein the first current collector comprises a first collector element (3) including an upper portion in contact with the first electrode (7) and a second collector element (4) in electrical continuity with, and extending laterally from, the first collector element (3) beyond the first electrode (7), with the device further comprising a dielectric element configured to electrically insulate the second collector element (4) and at least one among the second electrode (9) and the second current collector (10),
**characterised in that** the second collector element (4) comprises at least one layer of material and **in that** it includes the forming of an upper portion of the second collector element (4) made of a material different from the material of the upper portion of the first collector element (3) and transforming the material of only part of the thickness of the upper portion of the second collector element (4) into a modified material so as to form a surface layer (5) made of modified dielectric material forming at least part of the dielectric element.

2. Method according to claim 1, wherein the transformation comprises oxidation or nitriding.

3. Method according to any of the preceding claims, wherein the material of the upper portion of the second collector element (4) is selected to be more oxidisable than the material of the upper portion of the first collector element (3).

4. Method according to any of the preceding claims including a step involving the heat treatment of the first electrode (7), the said step being configured to produce the transformation.

5. Method according to any of the preceding claims, wherein the first collector element (3) is formed with a layer underlying the top layer of the first collector.

6. Method according to the preceding claim, wherein the underlying layer also forms the top layer of the second collector element (4).

7. Method according to one of the preceding claims, comprising the forming of the active layer in contact with an upper face of the first electrode (7), the forming of the second electrode (9) in contact with an upper face of the active layer and the forming of the second collector (10) in electrical continuity with the second electrode (9).

8. Method according to the preceding claim, wherein the forming of the second electrode (9) and the forming of the second collector (10) are configured such that at least either the second electrode (9) or the second collector (10) is electrically insulated from the first collector by contact on the surface layer.

9. Method according to any of the preceding claims, comprising a partial removal of the surface layer so as to expose the material of the upper portion of the second collector element (4) in an electrical contact re-establishing region.

10. Microelectronic device with the following stacked on one side of a substrate (1):
- a first current collector,
- a first electrode (7),
- an active layer (8),
- a second electrode (9),
- a second current collector (10),
wherein the first current collector comprises a first collector element (3) with an upper portion in contact with the first electrode (7) and a second collector element (4) in electrical continuity with, and extending laterally from, the first collector element (3) beyond the first electrode (7),
the device further comprises a dielectric element configured to electrically insulate the second collector element (4) and at least either the second electrode (9) or the second current collector (10),
**characterised in that** the second collector element (4) includes at least one layer of material and has an upper portion made of a material different from the material of the upper portion of the first collector element (3), and **in that** the dielectric element includes a surface layer (5) made of a modified dielectric material derived from the material of only part of the upper portion of the second collector element (4).

11. Device according to the preceding claim, wherein the modified material is an oxide or nitride of the material of the upper portion of the second collector element (4).

12. Device according to any of the two preceding claims, wherein the material of the upper portion of the second collector element (4) is more oxidisable than the material of the upper portion of the first collector element (3).

13. Device according to any of the three preceding claims, wherein the material of the upper portion of the first collector element (3) is platinum.

14. Device according to any of the four preceding claims, wherein the first collector comprises an underlying layer, part of which is located below the upper portion of the first collector element (3) and another part of which forms the upper portion of the second collector element (4).
